# EUROPEAN PATENT SPECIFICATION

(11) **EP 4 353 616 B1**
(45) Date of publication and mention of the grant of the patent: **15.10.2025**
(21) Application number: 22917733.2
(22) Date of filing: 05.01.2022
(51) Int. Cl.: B65D 63/16, H01M 50/172, H01M 50/20, H01M 50/298, H01M 50/543, F16B 2/08, F16L 3/137

(54) **ELECTRICAL CONNECTION STRUCTURE WITH FLEXIBLE TIE, AND BATTERY**
ELEKTRISCHE VERBINDUNGSSTRUKTUR MIT FLEXIBLEM BINDER,UND BATTERIE
STRUCTURE DE RACCORDEMENT ÉLECTRIQUE AVEC ATTACHE FLEXIBLE, ET BATTERIE

(43) Date of publication of application: 17.04.2024
(73) Proprietor: Contemporary Amperex Technology (Hong Kong) Limited, Central, Central And Western District (HK)
(72) Inventor: SU, Jiangang, Ningde, Fujian 352100 (CN); HUANG, Tiexiong, Ningde, Fujian 352100 (CN); YANG, Zhongbin, Ningde, Fujian 352100 (CN); TAN, Kangning, Ningde, Fujian 352100 (CN); GONG, Kuiyuan, Ningde, Fujian 352100 (CN); CHEN, Zhan, Ningde, Fujian 352100 (CN); PEI, Shuo, Ningde, Fujian 352100 (CN)
(74) Representative: Ran, Handong
(86) International application number: PCT/CN2022/070303
(87) International publication number: WO 2023/130256

(56) References cited:
- CN-A- 103 318 532
- CN-A- 110 451 082
- CN-U- 205 186 048
- CN-U- 206 142 144
- CN-U- 207 001 248
- CN-U- 207 001 248
- JP-A- 2008 071 628
- US-A- 4 413 380
- US-A1- 2017 088 322

## Description

### Technical Field

The present application relates to the technical field of batteries, and more particularly relates to a flexible cable tie, an electrical connection structure and a battery.

### Background

With energy saving and emission reduction being the key to the sustainable development of automotive industry, electric vehicles have become an important part of the sustainable development of automotive industry due to their advantages of energy saving and environment friendliness. For the electric vehicles, the battery technology is an important factor related to their development.

There are many connecting elements inside and outside a battery, and the way the connecting elements are connected plays an important role in connection reliability.

### Summary of the Invention

The present application provides an electrical connection structure and a battery.

In a first aspect, the present application provides an electrical connection structure according to claim 1. The electrical connection structure comprises a flexible cable tie, including:
a cable tie body; and
a first snapping portion and a second snapping portion which are arranged at a first end of the cable tie body and are spaced by a preset distance, where the cable tie body has an unfolded state and a wrapping state, in the unfolded state, the first snapping portion and the second snapping portion are arranged on the same side of the cable tie body, and in the wrapping state, a second end of the cable tie body is connected to the first snapping portion and the second snapping portion. Such features of a flexible cable tie are already known, for example from CN 207001248U, US 2017/088322A1 or CN 103318532A.

In the above embodiment, the flexible cable tie includes the two snapping portions which are respectively the first snapping portion and the second snapping portion. The two snapping portions may be respectively connected to the cable tie body after winding the cable tie body, thereby realizing dual fixing of the cable tie body, effectively improving connecting stability and reliability of the flexible cable tie, and preventing the flexible cable tie from accidentally loosening.

The first snapping portion and the second snapping portion are spaced by the preset distance, accordingly, a component to be connected may be arranged between the first snapping portion and the second snapping portion, and a component to be connected may also be arranged between the second snapping portion and the second end of the cable tie body, such that the cable tie body may wrap at least two components to be connected at the same time; and in addition, the component to be connected arranged between the first snapping portion and the second snapping portion, and the component to be connected arranged between the second snapping portion and the second end of the cable tie body may be isolated by the second snapping portion, for example, the two components to be connected may be electrically or thermally isolated, thereby satisfying an isolation requirement between the components to be connected

When the cable tie body is in the unfolded state, the first snapping portion and the second snapping portion are located on the same side of the cable tie body, such that the at least two components to be connected can be placed on the same side of the cable tie body, and then, components connected by the flexible cable tie are wrapped in a wrap space of the cable tie body through winding of the cable tie body, thereby protecting the components to be connected.

In some embodiments, the cable tie body is provided with a plurality of first locking teeth arranged in its length direction. The first snapping portion is provided with a first snapping hole, and the second snapping portion is provided with a second snapping hole. The plurality of first locking teeth are snap-fitted with the first snapping portion through the first snapping hole and are snap-fitted with the second snapping portion through the second snapping hole.

In the above embodiment, the cable tie body is in snap-fit with the first snapping portion through cooperation of the first locking teeth and the first snapping hole, and the cable tie body is in snap-fit with the second snapping portion through cooperation of the first locking teeth and the second snapping hole, which can improve connection convenience, and be beneficial to realize rapid connection.

When the flexible cable tie is required to be fastened, the second end of the cable tie body sequentially penetrates through the first snapping hole in the first snapping portion and the second snapping hole in the second snapping portion, one or some of the plurality of first locking teeth are in snap-fit with the first snapping hole, and another or some other of the plurality of first locking teeth are in snap-fit with the second snapping hole. By arranging the plurality of first locking teeth, a snap-fit position may be adjusted according to the size of a connecting component wrapped by the cable tie body, thereby adapting to connecting components different in size, and enlarging an application range of the flexible cable tie.

In some embodiments, the plurality of first locking teeth are arranged on a side surface, provided with the first snapping portion and the second snapping portion, of the cable tie body. The advantage of such arrangement is that in the wrapping state, the plurality of first locking teeth are wound to a position opposite to the first end of the cable tie body along with the second end of the cable tie body, such that the first locking teeth face the first snapping portion and the second snapping portion, and accordingly the first locking teeth are connected to the first snapping portion and the second snapping portion.

In some embodiments, a cross section of the cable tie body is in an arc shape in a width direction of the cable tie body, and the first snapping portion, the second snapping portion and the first locking teeth are all arranged on a concave side of the cable tie body.

The advantages of setting the cross section of the cable tie body to be arc, and arranging the first snapping portion, the second snapping portion and the first locking teeth on the concave side of the cable tie body are that the cable tie body may be in a form of two side edges wrapping a middle, and when the cable tie body enters the wrapping state, the component wrapped by the cable tie body can be protected due to the winding character of the cable tie body, thereby improving a protection effect.

In some embodiments, the first snapping hole is internally provided with a second locking tooth matched with the first locking teeth; and/or, the second snapping hole is internally provided with a third locking tooth matched with the first locking teeth.

By arranging the second locking tooth in the first snapping hole and arranging the third locking tooth in the second snapping hole, the first locking teeth may be matched with the second locking tooth and the third locking tooth to realize snap fit of the cable tie body, the first snapping portion and the second snapping portion, which can effectively improve stability and reliability of snap fit.

In some embodiments, in a direction perpendicular to the cable tie body, the height of the first locking tooth is greater than the distance between the top of the second locking tooth in the first snapping hole and the top wall of the first snapping hole; and/or, the height of the first locking tooth is greater than the distance between the top of the third locking tooth in the second snapping hole and the top wall of the second snapping hole. The advantage of such arrangement is that the first locking teeth can be prevented from disengaging after snapping, thereby effectively improving stability and reliability of snap fit.

In some embodiments, in the width direction of the cable tie body, the width of the first locking tooth is greater than the width of the second locking tooth; and/or, the width of the first locking tooth is greater than the width of the third locking tooth. The advantage of such arrangement is that meshing between the first locking teeth and the second locking tooth can be effectively guaranteed, so as to prevent snap-fit failure caused by the first locking teeth deviating from a position of engagement with the first locking teeth; or, meshing between the first locking teeth and the third locking tooth can be effectively guaranteed, so as to prevent snap-fit failure caused by the first locking teeth deviating from a position of engagement with the third locking tooth. The connecting stability can be effectively improved by increasing the width of the first locking teeth.

In some embodiments, the portion, opposite to the second locking tooth, of the first snapping hole is in an arc shape; and/or, the portion, opposite to the third locking tooth, of the second snapping hole is in an arc shape. In this way, after the cable tie body penetrates through the first snapping hole and the second snapping hole, the cable tie body is wound into an arc, thereby achieving a wrap type protection effect on the component wrapped by the cable tie body.

In some embodiments, a side surface of the first locking tooth is in a right triangle shape. By setting the first locking tooth to have the side surface being the right triangle shape, a matching surface with a slope can be formed, which facilitates the first locking tooth to penetrate through the first snapping hole and be blocked by the second locking tooth, or facilitates the first locking tooth to penetrate through the second snapping hole and be blocked by the third locking tooth. By setting the first locking tooth to have the side surface being the right triangle shape, an adjacent surface of the matching surface with the slope may also form a vertical surface, which is beneficial to improve a block effect. By setting the first locking tooth to have the side surface being the right triangle shape, a projected area of the first locking tooth on the cable tie body can be reduced, such that more first locking teeth can be arranged.

In some embodiments, the first snapping portion is arranged at a position close to the first end of the cable tie body, and the second snapping portion is arranged between the first snapping portion and the first locking teeth.

In some embodiments, the width of the second snapping hole is smaller than the width of the cable tie body. The advantages of such arrangement are that two sides of the cable tie body may be extruded to be bent and deformed towards the middle after penetrating through the second snapping hole, such that the cable tie body becomes the arc to better protect the component wrapped in the cable tie body; and moreover, the arched arc is also beneficial to prevent the connecting component in a vertical direction from being crushed by components falling from above.

In some embodiments, the width of the first snapping hole is greater than or equal to the width of the second snapping hole, and the two sides of the cable tie body are respectively attached to a side wall of the first snapping hole.

By setting the width w of the first snapping hole to be greater than or equal to the width w of the second snapping hole, an unfolding area of the cable tie body in the first snapping hole can be increased, thereby enlarging a coverage and protection range of the cable tie body, and preventing electric shock and other accidents caused by the connecting component wrapped by the cable tie body being exposed.

In some embodiments, in the direction perpendicular to the cable tie body, a distance between the top wall of the first snapping hole and the top surface of the first snapping portion is less than a distance between the top wall of the second snapping hole and the top surface of the second snapping portion. The advantages of such arrangement are that a height of the cable tie body at the second snapping portion may be lower than a height of the cable tie body at the first snapping portion, such that the cable tie body is integrally in an "8" shape after being wound, thereby achieving an effective fixing function, and moreover, a wrap length of the connecting component wrapped by the cable tie body can be increased in a circumferential direction, thereby improving wrap stability.

In the first aspect, according to the invention, the electrical connection structure includes:
a first connecting element, including a first connecting portion and a second connecting portion;
a second connecting element, including a third connecting portion and a fourth connecting portion;
a first connecting structure, through which the first connecting portion and the third connecting portion are electrically connected;
a second connecting structure, through which the second connecting portion and the fourth connecting portion are electrically connected, where the first connecting structure and the second connecting structure are located on two sides of the second snapping portion respectively; and
when the cable tie body is in a wrapping state, the first connecting structure is caused to be located among the first snapping portion, the second snapping portion and the cable tie body, and the second connecting structure is caused to be located between the second snapping portion and the cable tie body.

In the above embodiment, the first connecting portion and the second connecting portion may be connected to a positive electrode and a negative electrode of a battery body respectively, and the third connecting portion and the fourth connecting portion may be connected to a positive electrode and a negative electrode of an electrical apparatus respectively. The first connecting structure and the second connecting structure are located on the two sides of the second snapping portion respectively, which can realize electrical isolation of the first connecting structure and the second connecting structure through the second snapping portion, prevent the first connecting structure and the second connecting structure from short circuit due to electrical connection, and improve use safety of the electrical connection structure.

When the cable tie body enters the wrapping state, the cable tie body is wound, the second end, away from the first end, of the cable tie body is respectively connected to the first snapping portion and the second snapping portion, meanwhile, the first connecting structure is caused to be located among the first snapping portion, the second snapping portion and the cable tie body, and the second connecting structure is caused to be located between the second snapping portion and the cable tie body, such that the first connecting structure and the second connecting structure can be wrapped in a space enveloped by the cable tie body so as to be protected and be prevented from being damaged by outside, or people or objects are prevented from touching the first connecting structure and the second connecting structure and suffering from electric shock.

In some embodiments, the electrical connection structure further includes a first fixing element and a second fixing element, the first fixing element is used to fix the first connecting structure to the cable tie body, and the second fixing element is used to fix the second connecting structure to the cable tie body. By arranging the first fixing element, connection between the first connecting structure and the cable tie body can be realized, namely, connection among the first connecting portion, the third connecting portion and the cable tie body; and by arranging the second fixing element, connection between the second connecting structure and the cable tie body can be realized, namely, connection among the second connecting portion, the fourth connecting portion and the cable tie body.

In some embodiments, the cable tie body is provided with a first connecting hole and a second connecting hole. The first connecting hole is arranged between the first snapping portion and the second snapping portion, and the second connecting hole is arranged on the side, away from the first snapping portion, of the second snapping portion. The first fixing element penetrates through the first connecting structure and the first connecting hole so as to connect the first connecting portion, the third connecting portion and the cable tie body, and the second fixing element penetrates through the second connecting structure and the second connecting hole so as to connect the second connecting portion, the fourth connecting portion and the cable tie body. The cable tie body is provided with the first connecting hole and the second connecting hole, the first connecting hole is located between the first snapping portion and the second snapping portion, and the second connecting hole is arranged on the side, away from the first snapping portion, of the second snapping portion, such that the first connecting structure and the second connecting structure can be separably arranged on the two sides of the second snapping portion, thereby realizing electrical isolation and preventing accidents such as short circuit.

In a second aspect, a battery is provided, and includes:
a case internally provided with an accommodating cavity, where a side wall of the case is provided with a first through hole communicating with the accommodating cavity;
a battery body arranged in the accommodating cavity; and
the above-mentioned electrical connection structure.

The first connecting element is electrically connected to the battery body, the second connecting element is arranged outside the case, and the third connecting portion and the fourth connecting portion penetrate through the first through hole to be connected to the first connecting element, and the electrical connection structure is arranged in the accommodating cavity.

The above description is only a summary of the technical solutions of the present application. In order to understand the technical means of the present application more clearly, the technical means can be implemented according to the content of the specification. Furthermore, to make the above content and other objectives, features and advantages of the present application more comprehensible, specific implementations of the present application are exemplified below.

### Description of Drawings

In order to illustrate the technical solutions of the embodiments of the present application more clearly, the drawings required in the embodiments of the present application are briefly introduced. Obviously, the drawings described below are only some embodiments of the present application. For those of ordinary skill in the art, other drawings can also be obtained according to the drawings without any creative effort.
FIG. 1 is a structural schematic diagram of an electrical device according to some embodiments of the present application;
FIG. 2 is a schematic diagram of a partial structure of a battery according to some embodiments of the present application;
FIG. 3 is an exploded view of a battery according to some embodiments of the present application;
FIG. 4 is a structural schematic diagram of a battery with a cover body taken off according to some embodiments of the present application;
FIG. 5 is the top view of a battery with a cover body taken off according to some embodiments of the present application;
FIG. 6 is a structural schematic diagram of a first connecting element in a battery according to some embodiments of the present application;
FIG. 7 is a structural schematic diagram of a second connecting element in a battery according to some embodiments of the present application;
FIG. 8 is a structural schematic diagram of a fixing assembly in a battery according to some embodiments of the present application;
FIG. 9 is a first-angle schematic diagram of a flexible cable tie in a battery being in an unfolded state according to some embodiments of the present application;
FIG. 10 is a second-angle schematic diagram of a flexible cable tie in a battery being in an unfolded state according to some embodiments of the present application;
FIG. 11 is a first-angle schematic diagram of a flexible cable tie in a battery being in a wrapping state according to some embodiments of the present application;
FIG. 12 is a second-angle schematic diagram of a flexible cable tie in a battery being in a wrapping state according to some embodiments of the present application;
FIG. 13 is a structural schematic diagram of a flexible cable tie in a battery in a first angle according to some embodiments of the present application;
FIG. 14 is a structural schematic diagram of a flexible cable tie in a battery in a second angle according to some embodiments of the present application;
FIG. 15 is a side view of a flexible cable tie in a battery according to some embodiments of the present application;
FIG. 16 is a front view of a flexible cable tie in a battery according to some embodiments of the present application;
FIG. 17 is a section view of a battery along an A-A section in FIG. 16 according to some embodiments of the present application; and
FIG. 18 is a rear view of a flexible cable tie in a battery according to some embodiments of the present application.

In the drawings, the drawings are not drawn to actual scale.

Description of reference numerals:
100-vehicle; 10-battery; 20-controller; 30-motor;
1-case; 101-first cover body; 102-second cover body; 11-first through hole; 12-case body; 13-cover body; 2-battery body; 3-flexible cable tie; 31-cable tie body; 311-first connecting hole; 312-second connecting hole; 313-rounded corner; 31a-first region; 31b-second region; 31c-third region; 32-first snapping portion; 321-first snapping hole; 322-second locking tooth; 33-second snapping portion; 331-second snapping hole; 332-third locking tooth; 34-first locking tooth; 4-first connecting element; 41-first connecting portion; 42-second connecting portion; 43-first fixing hole; 44-second fixing hole; 5-second connecting element; 51-third connecting portion; 52-fourth connecting portion; 53-third fixing hole; 54-fourth fixing hole; 55-connecting body; 6-fixing assembly; 61-first fixing element; and 62-second fixing element.

### Detailed Description

Embodiments of technical solutions of the present application are described in detail below in conjunction with drawings. The following embodiments are only used to more clearly illustrate the technical solutions of the present application, and therefore are only used as examples but cannot be used to limit the scope of protection of the present application.

At present, high-voltage connectors on lithium batteries mostly adopt a hard plastic protective cover structure, and the protective cover is fixed at a designated position by structural limit or bolt locking. The function of the protective cover is mainly to isolate a high-voltage exposed part and prevent the high-voltage exposed part from making contact with personnel, avoiding electric shock accidents to the personnel.

When the protective cover is fixed by a limit structure, due to the large tolerance of supplied hard plastic materials, the problem that the size is too small or too large is likely to happen. If the size is too small, the protective layer cannot be snapped into the limit structure, causing limit failure; and if the size is too large, snapping will not be tight, and the protective cover will produce abnormal noise with shaking of a battery pack, causing a decline in customer satisfaction.

When the protective cover is fixed by means of bolt locking, since the protective cover is highly brittle and likely to crack, the manufacturing cost and labor cost will be increased.

In view of the above problems, after extensive research, the inventor has found that a flexible cable tie can be used to fix the high-voltage connector. The connection tightness of the flexible cable tie can be properly adjusted according to the size of a connected component, which will not be affected by the size of the protective cover. For example, there will be no limit failure due to the too small size of the protective cover, or shaking due to the too large size of the protective cover, such that the connection reliability can be improved, and the connected component is prevented from shaking; and meanwhile, the problem of protective cover cracking due to bolting is solved, and the manufacturing cost and labor cost can be saved.

The embodiment of a flexible cable tie provided in the present application can be applied to the battery to fix the high-voltage connector or other parts to be connected on the battery. Besides the battery, the embodiment of the flexible cable tie provided in the present application can also be applied to other devices, such as air conditioners and refrigerators.

A battery applying the flexible cable tie in the embodiment of the present application can be used, but not limited to, in electrical devices such as a vehicle, a ship, or an aircraft. A power supply system of the electrical device may be composed of the battery, etc. disclosed by the present application so as to provide electric energy for the electrical device. In this way, it is beneficial to improve the connection reliability between connecting components and effectively improve the service life of the battery.

The electrical device may be, but not limited to, a mobile phone, a portable device, a laptop, a battery vehicle, an electric vehicle, the ship, the spacecraft, an electric toy, an electric tool, etc. For example, the spacecraft includes an airplane, a rocket, a space shuttle, a spaceship and the like; the electric toy includes a fixed or mobile electric toy, such as a game console, an electric vehicle toy, an electric ship toy, an electric airplane toy and the like; and the electric tool includes a metal-cutting electric tool, a grinding electric tool, an assembly electric tool and a railway electric tool, such as an electric drill, an electric grinder, an electric wrench, an electric screwdriver, an electric hammer, an electric impact drill, a concrete vibrator and an electric planer.

For the convenience of description in the following embodiments, an electrical device being a vehicle 100 according to some embodiments of the present application is taken as an example for the description.

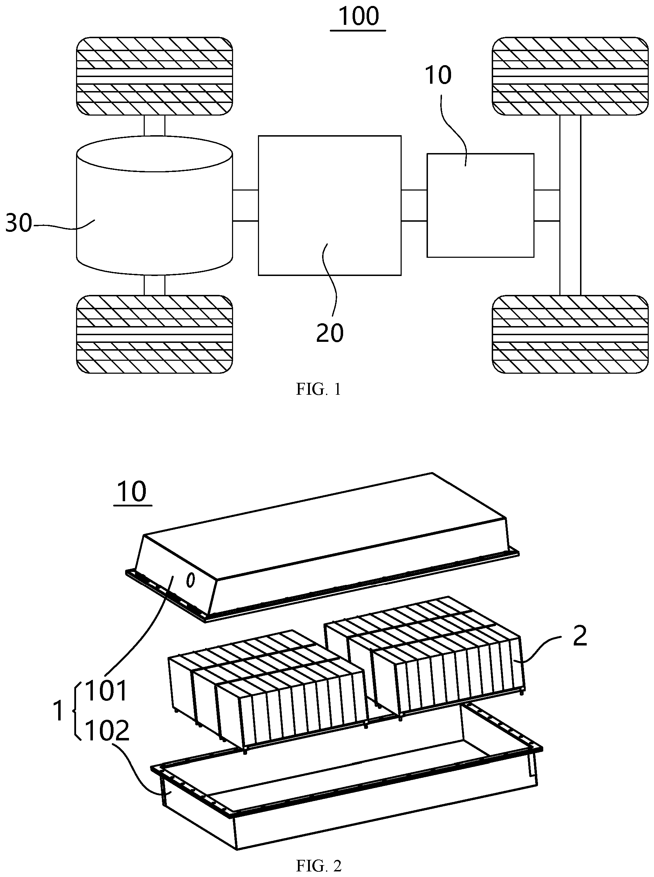

Please refer to FIG. 1, and FIG. 1 is a structural schematic diagram of a vehicle 100 according to some embodiments of the present application. The vehicle 100 may be a fuel vehicle, a gas vehicle, or a new energy vehicle, and the new energy vehicle may be an all-electric vehicle, a hybrid electric vehicle, or an extended range electric vehicle, or the like. The vehicle 100 is internally provided with a battery 10, and the battery 10 may be arranged at a bottom or head or tail of the vehicle 100. The battery 10 may be used to supply power to the vehicle 100. For example, the battery 10 may be used as an operating power source of the vehicle 100. The vehicle 100 may further include a controller 20 and a motor 30. The battery 10 is used to supply electric energy to operation of the motor 30 and other components in the vehicle. The controller 20 is used to control the motor 30 to work, such as to meet operation power demands during start, navigation and running of the vehicle 100.

In some embodiments of the present application, the battery 10 not only may serve as the operating power source of the vehicle 100, but also may serve as a driving power source of the vehicle 100, so as to replace or partially replace fuel or natural gas to provide driving power for the vehicle 100.

Please refer to FIG. 2, and FIG. 2 is an exploded view of a battery 10 according to some embodiments of the present application. The battery 10 includes a case 1 and a battery body 2 which is accommodated in the case 1. The case 1 is used to provide an accommodating space for the battery body 2, and the case 1 may be of various structures. In some embodiments, the case 1 may include a first cover body 101 and a second cover body 102 which are overlapped with each other and jointly define the accommodating space for accommodating the battery body 2. The second cover body 102 may be of a hollow structure with one end open, the first cover body 101 may be of a plate-shaped structure, and the first cover body 101 covers an open side of the second cover body 102, such that the first cover body 101 and the second cover body 102 jointly define the accommodating space; and both the first cover body 101 and the second cover body 102 may be of a hollow structure with one side open, and an open side of the first cover body 101 covers an open side of the second cover body 102.

The case 1 may be in various shapes and sizes, such as a rectangular solid, a cylinder and a hexagonal prism. Specifically, the shape of the case 1 may be determined according to the specific shape and size of an electrode assembly. The material of the case 1 may be selected from metallic materials such as copper, iron, aluminum, stainless steel and an aluminum alloy or non-metallic materials such as plastic.

In the battery 10, there may be one or more battery bodies 2, the plurality of battery bodies 2 may be connected in series, or in parallel or be in parallel-series connection, and the parallel-series connection means that the plurality of battery bodies 2 are connected both in series and parallel. The plurality of battery bodies 2 may be directly connected in series, or in parallel or be in parallel-series connection together, and then are assembled as a whole to be accommodated in the case 1; and of course, the battery 10 may also be in a form of battery modules formed by first connecting the plurality of battery bodies 2 in series, or in parallel or be in parallel-series connection, and the plurality of battery modules are then connected in series, or in parallel or be in parallel-series connection into a whole to be accommodated in the case 1. The battery 10 may further include other structures, for example, the battery 10 may further include a convergence component for electrically connecting the plurality of battery bodies 2.

The battery body 2 refers to the smallest unit constituting the battery. The battery body 2 includes a lithium-ion secondary battery, a lithium-ion primary battery, a lithium-sulfur battery, a sodium-lithium-ion battery, a sodium-ion battery, a magnesium-ion battery, or the like, which is not limited by the embodiments of the present disclosure. The battery body 2 may be in a cylindrical, flat or rectangular solid shape or in other shapes, which is also not limited by the embodiments of the present application. The battery bodies 2 are generally divided into three types according to packaging manners: cylindrical battery cells, prismatic battery cells and pouch battery cells, which are also not limited by the embodiments of the present application.

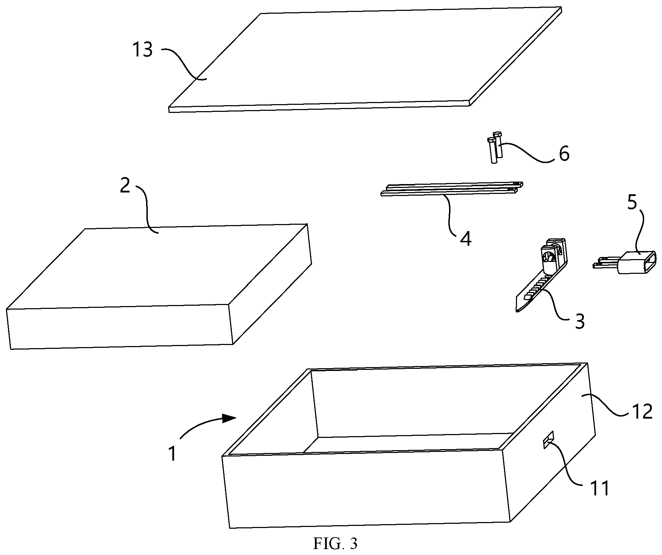

Please refer to FIG. 3 to FIG. 5, which are respectively an exploded view of a battery 10, and a structural schematic diagram and the top view of a battery 10 with a cover body taken off according to some embodiments of the present application. The battery body 2 is arranged in an accommodating cavity of the case 1. The battery 10 includes a first connecting element 4 connected to the battery body 2, the first connecting element 4 is electrically connected to a second connecting element 5, and the second connecting element 5 is connected to an electrical apparatus to supply electric energy to the electrical apparatus.

The battery 10 further includes a fixing assembly 6, the first connecting element 4, the second connecting element 5 and a flexible cable tie 3 in an unfolded state are first connected through the fixing assembly 6, and then the flexible cable tie 3 is wound to wrap connected portions of the first connecting element 4, the second connecting element 5 and the flexible cable tie 3

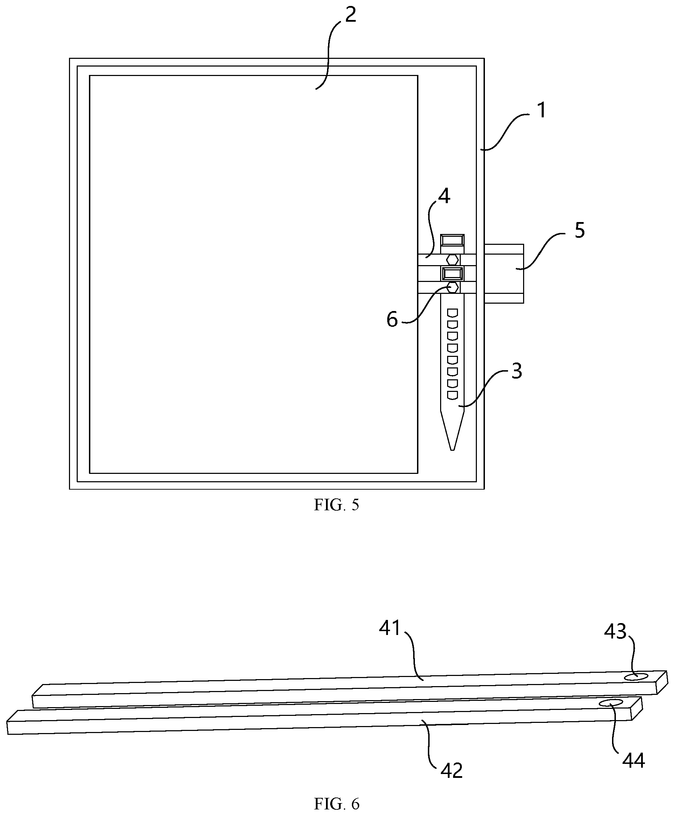

As shown in FIG. 6, the first connecting element 4 includes a first connecting portion 41 and a second connecting portion 42, the first connecting portion 41 is provided with a first fixing hole 43, and the second connecting portion 42 is provided with a second fixing hole 44.

In some embodiments, the first connecting portion 41 is connected to a positive electrode of the battery body 2, and the second connecting portion 42 is connected to a negative electrode of the battery body 2.

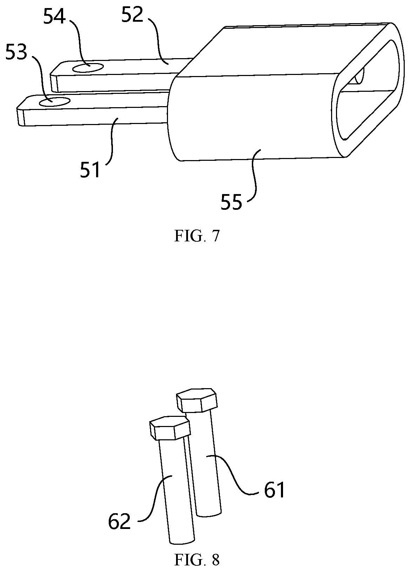

As shown in FIG. 7, the second connecting element 5 includes a third connecting portion 51, a fourth connecting portion 52 and a connecting body 55, and both the third connecting portion 51 and the fourth connecting portion 52 are connected to the connecting body 55. The connecting body 55 is connected to the electrical apparatus. The third connecting portion 51 is electrically connected to the first connecting portion 41, and the fourth connecting portion 52 is electrically connected to the second connecting portion 42.

A third fixing hole 53 is formed in the third connecting portion 51, and a fourth fixing hole 54 is formed in the fourth connecting portion 52.

The third connecting portion 51 and the first connecting portion 41 may be electrically connected by welding, bonding, bolting or other manners, and the fourth connecting portion 52 and the second connecting portion 42 may be electrically connected by welding, bonding, bolting or other manners.

In some embodiments, the third connecting portion 51 is connected to a positive electrode of the electrical apparatus, and the fourth connecting portion 52 is connected to a negative electrode of the electrical apparatus.

As shown in FIG. 8, the fixing assembly 6 includes a first fixing element 61 and a second fixing element 62. The first fixing element 61 and the second fixing element 62 may be bolts, hinge pins or the like.

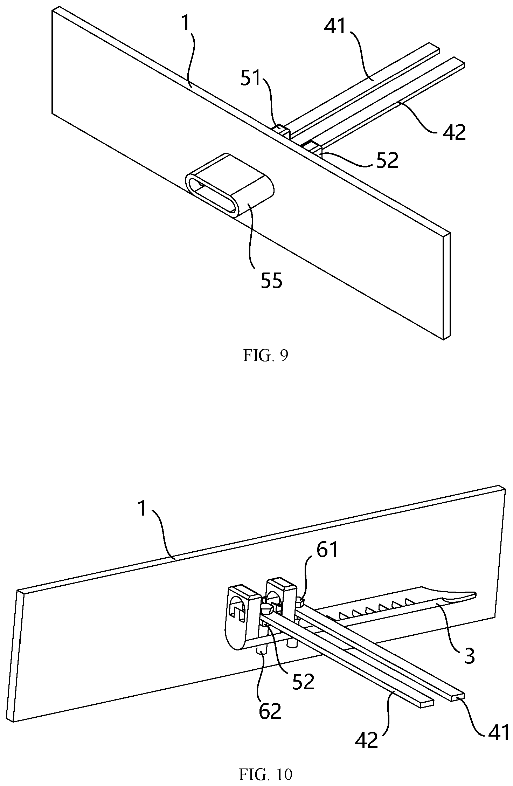

As shown in FIG. 9 and FIG. 10, the flexible cable tie 3 is in the unfolded state, and the first fixing element 61 penetrates through the first fixing hole 43, the third fixing hole 53 and a cable tie body 31 to connect the first connecting portion 41, the third connecting portion 51 and the cable tie body 31; and the second fixing element 62 penetrates through the second fixing hole 44, the fourth fixing hole 54 and the cable tie body 31 to connect the second connecting portion 42, the fourth connecting portion 52 and the cable tie body 31.

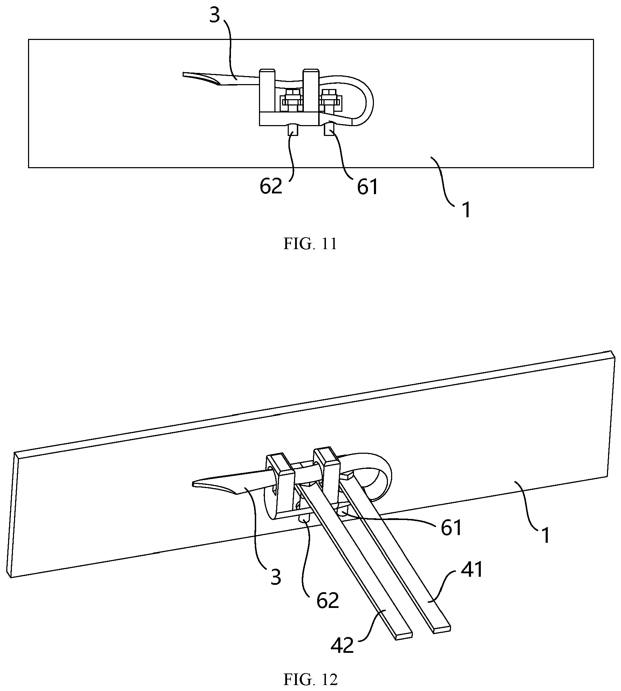

As shown in FIG. 11 and FIG. 12, the cable tie body 31 is wound, having two ends tied together, such that the connected portions of the first connecting element 4, the second connecting element 5 and the cable tie body 31 are wrapped in an inner circle of the cable tie body 31, thereby protecting the first connecting element 4, the second connecting element 5 and the fixing assembly 6.

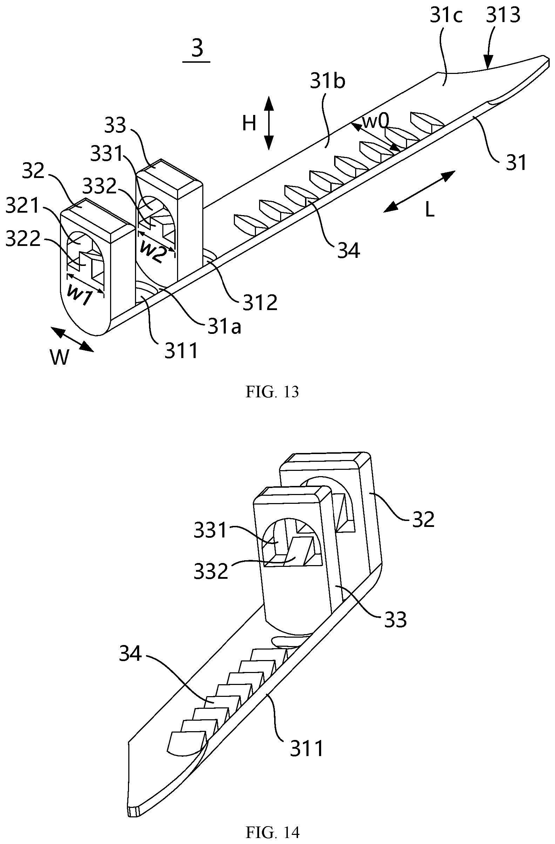

As shown in FIG. 13 to FIG. 15, the flexible cable tie 3 includes a cable tie body 31, a first snapping portion 32 and a second snapping portion 33, the first snapping portion 32 and the second snapping portion 33 are arranged at a first end of the cable tie body 31 and are spaced by a preset distance. The cable tie body 31 has an unfolded state, and in the unfolded state, the first snapping portion 32 and the second snapping portion 33 are arranged on the same side of the cable tie body 31; and in a wrapping state, a second end of the cable tie body 31 is connected to the first snapping portion 32 and the second snapping portion 33.

In the above embodiment, the flexible cable tie 3 includes the two snapping portions which are respectively the first snapping portion 32 and the second snapping portion 33. The two snapping portions may be respectively connected to the cable tie body 31 after winding the cable tie body 31, thereby realizing dual fixing of the cable tie body 31, effectively improving connecting stability and reliability of the flexible cable tie 3, and preventing the flexible cable tie 3 from accidentally loosening.

The first snapping portion 32 and the second snapping portion 33 are spaced by the preset distance, accordingly, a component to be connected may be arranged between the first snapping portion 32 and the second snapping portion 33, and a component to be connected may also be arranged between the second snapping portion 33 and the second end of the cable tie body 31, such that the cable tie body 3 may wrap at least two components to be connected at the same time; and in addition, the component to be connected arranged between the first snapping portion 32 and the second snapping portion 33, and the component to be connected arranged between the second snapping portion 33 and the second end of the cable tie body 31 may be isolated by the second snapping portion 33, for example, the two components to be connected may be electrically or thermally isolated, thereby satisfying an isolation requirement between the components to be connected.

When the cable tie body 31 is in the unfolded state, the first snapping portion 32 and the second snapping portion 33 are located on the same side of the cable tie body 31, such that the at least two components to be connected can be placed on the same side of the cable tie body 31, and then, components connected by the flexible cable tie 3 are wrapped in a wrap space of the cable tie body 31 through winding of the cable tie body 31, thereby protecting the components to be connected.

In some embodiments, the cable tie body 31 is made of insulating materials. The advantage of such arrangement is that the components wrapped by the cable tie body 31 can be insulated and protected to avoid electric shock accidents.

In some embodiments, the cable tie body 31 is provided with a plurality of first locking teeth 34 arranged in its length direction (L). The first snapping portion 32 is provided with a first snapping hole 321, and the second snapping portion 33 is provided with a second snapping hole 331. The plurality of first locking teeth 34 are snap-fitted with the first snapping portion 32 through the first snapping hole 321 and are snap-fitted with the second snapping portion 33 through the second snapping hole 331.

In the above embodiment, the cable tie body 31 is in snap-fit with the first snapping portion 32 through cooperation of the first locking teeth 34 and the first snapping hole 321, and the cable tie body 31 is in snap-fit with the second snapping portion 33 through cooperation of the first locking teeth 34 and the second snapping hole 331, which can improve connection convenience, and be beneficial to realize rapid connection.

When the flexible cable tie 3 is required to be fastened, the second end of the cable tie body 31 sequentially penetrates through the first snapping hole 321 in the first snapping portion 32 and the second snapping hole 331 in the second snapping portion 33, one or some of the plurality of first locking teeth 34 are in snap-fit with the first snapping hole 321, and another or some other of the plurality of first locking teeth 34 are in snap-fit with the second snapping hole 331. By arranging the plurality of first locking teeth 34, a snap-fit position may be adjusted according to the size of a connecting component wrapped by the cable tie body 31, thereby adapting to connecting components different in size, and enlarging an application range of the flexible cable tie 3.

In some embodiments, the plurality of first locking teeth 34 are arranged on a side surface, provided with the first snapping portion 32 and the second snapping portion 33, of the cable tie body 31. That is, in the unfolded state, the plurality of first locking teeth 34, the first snapping portion 32 and the second snapping portion 33 are all located on the same side of the cable tie body 31. The advantage of such arrangement is that in the wrapping state, the plurality of first locking teeth 34 are wound to a position opposite to the first end of the cable tie body 31 along with the second end of the cable tie body 31, such that the first locking teeth 34 face the first snapping portion 32 and the second snapping portion 33, and accordingly the first locking teeth 34 are connected to the first snapping portion 32 and the second snapping portion 33.

As shown in FIG. 13 and FIG. 14, in some embodiments, a cross section of the cable tie body 31 is in an arc shape in a width direction (W) of the cable tie body 31, and the first snapping portion 32, the second snapping portion 33 and the first locking teeth 34 are all arranged on a concave side of the cable tie body 31.

The advantages of setting the cross section of the cable tie body 31 to be arc, and arranging the first snapping portion 32, the second snapping portion 33 and the first locking teeth 34 on the concave side of the cable tie body 31 are that the cable tie body 31 may be in a form of two side edges wrapping a middle, and when the cable tie body 31 enters the wrapping state, the component wrapped by the cable tie body 31 can be protected due to the winding character of the cable tie body 31, thereby improving a protection effect.

In some embodiments, the first snapping hole 321 is internally provided with a second locking tooth 322 matched with the first locking teeth 34; and/or, the second snapping hole 331 is internally provided with a third locking tooth 332 matched with the first locking teeth 34.

By arranging the second locking tooth 322 in the first snapping hole 321 and arranging the third locking tooth 332 in the second snapping hole 331, the first locking teeth 34 may be matched with the second locking tooth 322 and the third locking tooth 332 to realize snap fit of the cable tie body 31, the first snapping portion 32 and the second snapping portion 33, which can effectively improve stability and reliability of snap fit.

In some embodiments, in a direction (H) perpendicular to the cable tie body 31, a height of the first locking tooth 34 is greater than a distance between the top of the second locking tooth 322 in the first snapping hole 321 and the top wall of the first snapping hole 321; and or, a height of the first locking tooth 34 is greater than a distance between the top of the third locking tooth 332 in the second snapping hole 331 and the top wall of the second snapping hole 331. The advantage of such arrangement is that the first locking teeth 34 can be prevented from disengaging after snapping, thereby effectively improving stability and reliability of snap fit.

In some embodiments, in a width direction (W) of the cable tie body 31, the width of the first locking teeth 34 is greater than that of the second locking tooth 322; and/or, the width of the first locking teeth 34 is greater than that of the third locking tooth 332. The advantage of such arrangement is that meshing between the first locking teeth 34 and the second locking tooth 322 can be effectively guaranteed, so as to prevent snap-fit failure caused by the first locking teeth 34 deviating from a position of engagement with the first locking teeth 322; or, meshing between the first locking teeth 34 and the third locking tooth 332 can be effectively guaranteed, so as to prevent snap-fit failure caused by the first locking teeth 34 deviating from a position of engagement with the third locking tooth 332. The connecting stability can be effectively improved by increasing the width of the first locking teeth 34.

In some embodiments, the portion, opposite to the second locking tooth 322, of the first snapping hole 321 is in an arc shape; and/or, the portion, opposite to the third locking tooth 332, of the second snapping hole 331 is in an arc shape.

As shown in FIG. 13 and FIG. 14, by setting the portion, opposite to the second locking tooth 322, of the first snapping hole 321 and the portion, opposite to the third locking tooth 332, of the second snapping hole 331 to be in the arc shape, after the cable tie body 31 penetrates through the first snapping hole 321 and the second snapping hole 331, the cable tie body 31 is wound into an arc, thereby achieving a wrap type protection effect on the component wrapped by the cable tie body 31.

In some embodiments, a side surface of the first locking tooth 34 is in a right triangle shape. By setting the first locking tooth 34 to have the side surface being the right triangle shape, a matching surface with a slope can be formed, which facilitates the first locking tooth 34 to penetrate through the first snapping hole 321 and be blocked by the second locking tooth 322, or facilitates the first locking tooth 34 to penetrate through the second snapping hole 331 and be blocked by the third locking tooth 332. By setting the first locking tooth 34 to have the side surface being the right triangle shape, an adjacent surface of the matching surface with the slope may also form a vertical surface, which is beneficial to improve a block effect. By setting the first locking tooth 34 to have the side surface being the right triangle shape, a projected area of the first locking tooth 34 on the cable tie body 31 can be reduced, such that more first locking teeth 34 can be arranged.

In some embodiments, the first snapping portion 32 is arranged at a position close to the first end of the cable tie body 31, and the second snapping portion 33 is arranged between the first snapping portion 32 and the first locking teeth 34. The first snapping portion 32 and the second snapping portion 33 are arranged at intervals in the length direction (L) of the cable tie body 31. The second snapping portion 33 is arranged on the side, away from the first end of the cable tie body 31, of the first snapping portion 32.

In some embodiments, the width w2 of the second snapping hole 331 is smaller than the width w0 of the cable tie body 31. The advantages of such arrangement are that two sides of the cable tie body 31 may be extruded to be bent and deformed towards the middle after penetrating through the second snapping hole 331, such that the cable tie body 31 becomes the arc to better protect the component wrapped in the cable tie body 31; and moreover, the arched arc is also beneficial to prevent the connecting component in a vertical direction from being crushed by components falling from above.

In some embodiments, the width w1 of the first snapping hole 321 is greater than or equal to the width w2 of the second snapping hole 331, and the two sides of the cable tie body 31 are respectively attached to a side wall of the first snapping hole 321.

When the cable tie body 31 is wound, the cable tie body 31 first penetrates through the second snapping hole 331, and then penetrates through the first snapping hole 321. The width w1 of the first snapping hole 321 is greater than or equal to the width w2 of the second snapping hole 331, which can make a tightness degree of fit between the cable tie body 31 and the second snapping hole 331 in the width direction (W) greater than or equal to a tightness degree of fit between the first snapping hole 321 and the cable tie body 31 in the width direction (W), thereby improving firmness of fit between the cable tie body 31 and the second snapping hole 331, and reducing the requirements for firmness of fit of the first snapping hole 321.

By setting the width w1 of the first snapping hole 321 to be greater than or equal to the width w2 of the second snapping hole 331, an unfolding area of the cable tie body 31 in the first snapping hole 321 can be increased, thereby enlarging a coverage and protection range of the cable tie body 31, and preventing electric shock and other accidents caused by the connecting component wrapped by the cable tie body 31 being exposed.

In some embodiments, in the direction (H) perpendicular to the cable tie body 31, a distance between the top wall of the first snapping hole 321 and the top surface of the first snapping portion 32 is less than a distance between the top wall of the second snapping hole 331 and the top surface of the second snapping portion 33.

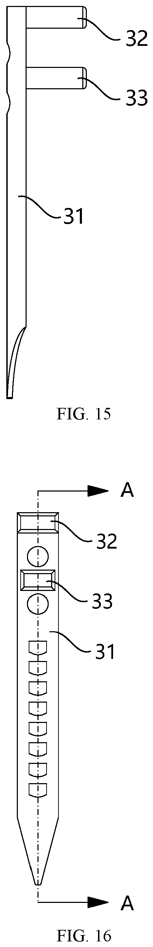

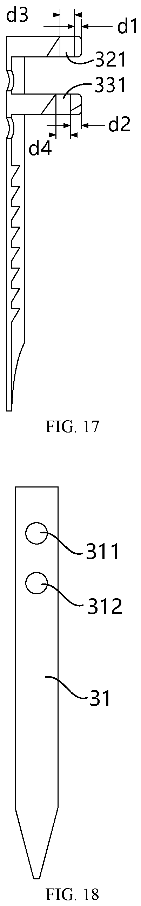

As shown in FIG. 16 and FIG. 17, the distance between the top wall of the first snapping hole 321 and the top surface of the first snapping portion 32 is d1, the distance between the top wall of the second snapping hole 331 and the top surface of the second snapping portion 33 is d2, and d1<d2. The advantages of such arrangement are that a height of the cable tie body 31 at the second snapping portion 33 may be lower than a height of the cable tie body 31 at the first snapping portion 32, such that the cable tie body 31 is integrally in an "8" shape after being wound, thereby achieving an effective fixing function, and moreover, a wrap length of the connecting component wrapped by the cable tie body 31 can be increased in a circumferential direction, thereby improving wrap stability.

In some embodiments, the cable tie body 31 includes a first region 31a, a second region 31b and a third region 31c arranged in the length direction (L), the second region 31b is located between the first region 31a and the third region 31c, the first snapping portion 32 and the second snapping portion 33 are both disposed in the first region 31a, the first locking teeth 34 are disposed in the second region 31b, and a surface of the third region 31c is basically smooth. The surface of the third region 31c is set to be smooth, so that the cable tie body 31 can penetrate through the first snapping hole 321 of the first snapping portion 32 and the second snapping hole 331 of the second snapping portion 33 more smoothly, thereby improving the convenience of connecting the cable tie body 31 with the first snapping portion 32 and the second snapping portion 33.

In some embodiments, the end portion, away from the second region 31b, of the third region 31c includes a rounded corner 313. By arranging the rounded corner 313, the convenience that the cable tie body 31 penetrates through the first snapping hole 321 and the second snapping hole 331 can be further improved. Moreover, by arranging the rounded corner 313, it is also possible to avoid puncturing an operator.

In some embodiments, in the width direction (W) of the cable tie body 31, the cable tie body 31 includes a first portion and a second portion and a third portion located on two sides of the first portion, and a thickness of the first portion is greater than those of the second portion and the third portion. The advantages of such arrangement are that when the cable tie body 31 penetrates through the first snapping hole 321 and the second snapping hole 331, the second portion and the third portion located on the two sides can be deformed more easily, so that the cable tie body 31 forms a shape of inward roll so as to stably wrap a protection interface of the component wrapped by the same, and better protect the component wrapped by the same; and the two sides of the cable tie body 31 may also be attached to hole walls of the first snapping hole 321 and the second snapping hole 331, thereby improving stability of snap fit.

As shown in FIG. 18, the cable tie body 31 is provided with a first connecting hole 311 and a second connecting hole 312.

The first connecting hole 311 and the second connecting hole 312 may be circular holes, or elongated holes or holes of other shapes. The first connecting hole 311 and the second connecting hole 312 may be used to connect the cable tie body 31 with the first connecting element 4 and the second connecting element 5, and may also be used to avoid a protruding structure on the first connecting element 4 or the second connecting element 5.

The first connecting hole 311 is located between the first snapping portion 32 and the second snapping portion 33, the second connecting hole 312 is located between the second snapping portion 33 and the first locking teeth 34, and the first connecting hole 311 and the second connecting hole 312 are symmetrically formed in two sides of the second snapping portion 33. Due to such arrangement, two connecting portions of the first connecting element 4 and two connecting portions of the second connecting element 5 are respectively connected to the two sides of the second snapping portion 33, thereby realizing electrical isolation or thermal isolation or the like.

The present application further provides an electrical connection structure, including the first connecting element 4, the second connecting element 5, a first connecting structure, a second connecting structure and the flexible cable tie 3. The first connecting element 4 includes the first connecting portion 41 and the second connecting portion 42. The second connecting element 5 includes the third connecting portion 51 and the fourth connecting portion 52. The first connecting portion 41 and the third connecting portion 51 are electrically connected through the first connecting structure. The second connecting portion 42 and the fourth connecting portion 52 are electrically connected through the second connecting structure. The first connecting structure and the second connecting structure are located on two sides of a second snapping portion 33 respectively. When the cable tie body 31 is in a wrapping state, the first connecting structure is caused to be located among the first snapping portion 32, the second snapping portion 33 and the cable tie body 31, and the second connecting structure is caused to be located between the second snapping portion 33 and the cable tie body 31.

In the above embodiment, the first connecting element 4 includes the two connecting portions, which are respectively the first connecting portion 41 and the second connecting portion 42, and the second connecting element 5 includes the two connecting portions, which are respectively the third connecting portion 51 and the fourth connecting portion 52. The first connecting portion 41 and the second connecting portion 42 may be electrically connected to a positive electrode and a negative electrode of a battery 2 respectively, and the third connecting portion 51 and the fourth connecting portion 52 may be electrically connected to a positive electrode and a negative electrode of an electrical apparatus respectively. The first connecting portion 41 and the third connecting portion 51 are electrically connected through the first connecting structure, the second connecting portion 42 and the fourth connecting portion 52 are electrically connected through the second connecting structure, and the first connecting structure and the second connecting structure are located on the two sides of the second snapping portion 33 respectively, which can realize electrical isolation of the first connecting structure and the second connecting structure through the second snapping portion 33, prevent the first connecting structure and the second connecting structure from short circuit due to electrical connection, and improve use safety of the electrical connection structure.

When the cable tie body 31 enters the wrapping state, the cable tie body 31 is wound, the second end, away from the first end, of the cable tie body 31 is respectively connected to the first snapping portion 32 and the second snapping portion 33, meanwhile, the first connecting structure is caused to be located among the first snapping portion 32, the second snapping portion 33 and the cable tie body 31, and the second connecting structure is caused to be located between the second snapping portion 33 and the cable tie body 31, such that the first connecting structure and the second connecting structure can be wrapped in a space enveloped by the cable tie body 31 so as to be protected and be prevented from being damaged by outside, or people or objects are prevented from touching the first connecting structure and the second connecting structure and suffering from electric shock.

There may be a plurality of options for specific structures of the first connecting structure and the second connecting structure, for example, the first connecting portion 41 and the third connecting portion 51 may be connected by structures such as welding, bonding or bolting, and the second connecting portion 42 and the fourth connecting portion 52 may be connected by structures, such as welding, bonding or bolting.

In some embodiments, the electrical connection structure further includes a first fixing element 61 and a second fixing element 62, the first fixing element 61 is used to fix the first connecting structure to the cable tie body 31, and the second fixing element 62 is used to fix the second connecting structure to the cable tie body 31.

By arranging the first fixing element 61, connection between the first connecting structure and the cable tie body 31 can be realized, namely, connection among the first connecting portion 41, the third connecting portion 51 and the cable tie body 31; and by arranging the second fixing element 62, connection between the second connecting structure and the cable tie body 31 can be realized, namely, connection among the second connecting portion 42, the fourth connecting portion 52 and the cable tie body 31.

In some embodiments, the cable tie body 31 is provided with a first connecting hole 311 and a second connecting hole 312. The first connecting hole 311 is arranged between the first snapping portion 32 and the second snapping portion 33, and the second connecting hole 312 is arranged on the side, away from the first snapping portion 32, of the second snapping portion 33. The first snapping portion 32 is provided with a first snapping hole 321, the second snapping portion 33 is provided with a second snapping hole 331, the first fixing element 61 penetrates through the first connecting structure and the first connecting hole 311 so as to connect the first connecting portion 41, the third connecting portion 51 and the cable tie body 31, and the second fixing element 62 penetrates through the second connecting structure and the second connecting hole 312 so as to connect the second connecting portion 42, the fourth connecting portion 52 and the cable tie body 31. In this embodiment, the first connecting structure includes the first fixing hole 43 formed in the first connecting portion 41 and the third fixing hole 53 formed in the third connecting portion 51, and the second connecting structure includes the second fixing hole 44 formed in the second connecting portion 42, and the fourth fixing hole 54 formed in the fourth connecting portion 52.

The cable tie body 31 is provided with the first connecting hole 311 and the second connecting hole 312, the first connecting hole 311 is located between the first snapping portion 32 and the second snapping portion 33, and the second connecting hole 312 is arranged on the side, away from the first snapping portion 32, of the second snapping portion 33, such that the first connecting structure and the second connecting structure can be separably arranged on the two sides of the second snapping portion 33, thereby realizing electrical isolation and preventing accidents such as short circuit.

In some other embodiments, the first connecting structure includes the first fixing hole 43 formed in the first connecting portion 41, the third fixing hole 53 formed in the third connecting portion 51, and the first fixing element 61, and the first connecting portion 41 and the third connecting portion 51 are electrically connected after the first fixing element 61 penetrates through the first fixing hole 43 and the third fixing hole 53; and in addition, the first fixing element 61 further penetrates through the first connecting hole 311 formed in the cable tie body 31, thereby connecting the first connecting portion 41, the third connecting portion 51 and the cable tie body 31. The second connecting structure includes the second fixing hole 44 formed in the second connecting portion 42, the fourth fixing hole 54 formed in the fourth connecting portion 52, and the second fixing element 62, and the second connecting portion 42 and the fourth connecting portion 52 are electrically connected after the second fixing element 62 penetrates through the third fixing hole 53 and the fourth fixing hole 54; and in addition, the second fixing element 62 further penetrates through the second connecting hole 312 formed in the cable tie body 31, thereby connecting the second connecting portion 42, the fourth connecting portion 52 and the cable tie body 31.

The present application further provides a battery, including a case 1, a battery body 2 and the electrical connection structure. An accommodating cavity is formed in the case 1, a side wall of the case 1 is provided with a first through hole 11 communicating with the accommodating cavity, the battery body 2 is arranged in the accommodating cavity, the first connecting element 4 is electrically connected to the battery body 2, the second connecting element 5 is arranged outside the case 1, and the third connecting portion 51 and the fourth connecting portion 52 penetrate through the first through hole 11 to be connected to the first connecting element 4, and the electrical connection structure is arranged in the accommodating cavity.

In the embodiment of the battery provided by the present application, the battery body 2 and an electrical apparatus are connected through the electrical connection structure, the first connecting element 4 located in the case 1 of the battery and the second connecting element 5 stretching, through the first through hole 11, into the case 1 are electrically connected, and connected and wrapped by the flexible cable tie 3, such that connected portions of the first connecting element 4 and the second connecting element 5 can be securely protected by the flexible cable tie 3, and use safety of the battery is improved.

In the embodiment of the battery provided by the present application, the second connecting element 5 may include a high-voltage connector. The embodiment of the present application abandons the scheme of protecting the high-voltage connector through a protective cover made of hard plastic materials in the related art, and uses the flexible cable tie 3 with flexibility to protect the high-voltage connector, which solves the problems such as limit failure, shaking and easy cracking of the protective cover due to a manufacturing error or high brittleness of the protective cover of the high-voltage connector.

The structures of the battery, the electrical connection structure and the flexible cable tie according to some embodiments of the present application are described below in conjunction with FIG. 3 to FIG. 18.

As shown in FIG. 3, the battery 10 includes the case 1, the battery body 2, the flexible cable tie 3, the first connecting element 4, the second connecting element 5 and the fixing assembly 6. The case 1 is provided with the first through hole 11.

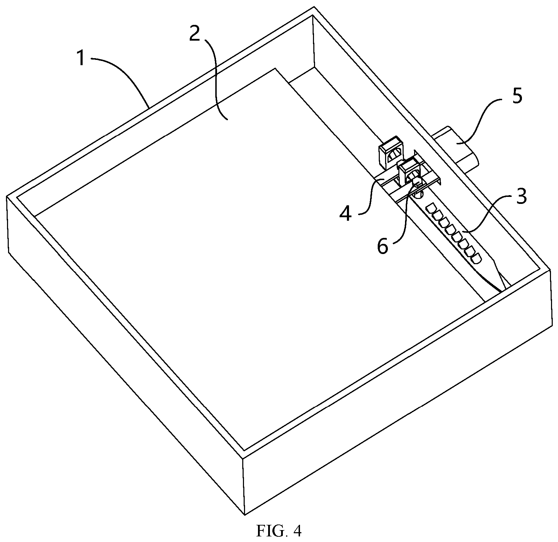

As shown in FIG. 4 and FIG. 5, the battery body 2, the flexible cable tie 3 and the first connecting element 4 are all arranged in the case 1. There may be one or more battery bodies 2 in the case 1. One end of the second connecting element 5 stretches into the case 1 through the first through hole 11, and the second connecting element 5 and the first connecting element 4 are connected to the flexible cable tie 3 through the fixing assembly 6. The second connecting element 5 is used to be connected to the electrical apparatus to provide electric energy for the electrical apparatus. The electrical apparatus may be an apparatus required to provide electric energy and maintain operation of the electrical device.

As shown in FIG. 6, the first connecting element 4 includes the first connecting portion 41 and the second connecting portion 42, the first connecting portion 41 is provided with the first fixing hole 43, and the second connecting portion 42 is provided with the second fixing hole 44. The first connecting portion 41 and the second connecting portion 42 may be electrical wires.

As shown in FIG. 7, the second connecting element 5 includes the third connecting portion 51, the fourth connecting portion 52 and the connecting body 55, and both the third connecting portion 51 and the fourth connecting portion 52 are connected to the connecting body 55. The third connecting portion 51 and the fourth connecting portion 52 may be electrical wires. The connecting body 55 is an oval cylinder. The connecting body 55 is connected to the electrical apparatus. The third fixing hole 53 is formed in the third connecting portion 51, and the fourth fixing hole 54 is formed in the fourth connecting portion 52.

As shown in FIG. 8, the fixing assembly 6 includes a first fixing element 61 and a second fixing element 62. The first fixing element 61 and the second fixing element 62 may be bolts, hinge pins or the like.

As shown in FIG. 9 to FIG. 12, the first connecting portion 41 is connected to the positive electrode of the battery body 2, and the second connecting portion 42 is connected to the negative electrode of the battery body 2. The third connecting portion 51 is connected to the positive electrode of the electrical apparatus, and the fourth connecting portion 52 is connected to the negative electrode of the electrical apparatus. The first connecting portion 41 and the third connecting portion 51 are electrically connected through the first connecting structure, and the second connecting portion 42 and the fourth connecting portion 52 are electrically connected through the second connecting structure. The first connecting structure includes the first fixing hole 43 formed in the first connecting portion 41 and the third fixing hole 53 formed in the third connecting portion 51, and the second connecting structure includes the second fixing hole 44 formed in the second connecting portion 42, and the fourth fixing hole 54 formed in the fourth connecting portion 52. Refer to FIG. 13, the cable tie body 31 is provided with the first connecting hole 311 and the second connecting hole 312. The first fixing element 61 sequentially penetrates through the third fixing hole 53, the first fixing hole 43 and the first connecting hole 311 so as to connect the third connecting portion 51, the first connecting portion 41 and the flexible cable tie 3; and the second fixing element 62 sequentially penetrates through the fourth fixing hole 54, the second fixing hole 44 and the second connecting hole 312 so as to connect the fourth connecting portion 52, the second connecting portion 42 and the flexible cable tie 3.

As shown in FIG. 9 and FIG. 10, the flexible cable tie 3 is in the unfolded state. As shown in FIG. 11 and FIG. 12, the flexible cable tie 3 is in the wrapping state, after the cable tie body 31 is wound, the second end, away from the first end, of the cable tie body 31 is respectively connected to the first snapping portion 32 and the second snapping portion 33, the first connecting structure is caused to be located among the first snapping portion 32, the second snapping portion 33 and the cable tie body 31, and the second connecting structure is caused to be located between the second snapping portion 33 and the cable tie body 31.

As shown in FIG. 13 to FIG. 15, the flexible cable tie 3 includes the cable tie body 31, the cable tie body 31 includes the first region 31a, the second region 31b and the third region 31c in the length direction (L) of the cable tie body 31, and the second region 31b is located between the first region 31a and the third region 31c. The end, away from the second region 31b, of the first region 31a is the first end of the cable tie body 31, and the end, away from the second region 31b, of the third region 31c is the second end of the cable tie body 31.

Both the first snapping portion 32 and the second snapping portion 33 are arranged in the first region 31a of the cable tie body 31. The second region 31b of the cable tie body 31 is provided with the plurality of first locking teeth 34 in the length direction (L). The third region 31c is smooth. The second end of the cable tie body 31 is provided with the rounded corner 313.

The first snapping portion 32 is arranged at the first end of the cable tie body 31, and the side surface of the first snapping portion 32 is flush with an end surface of the first end of the cable tie body 31. The second snapping portion 33 is arranged between the first snapping portion 32 and the first locking teeth 34. The first snapping portion 32 and the second snapping portion 33 are spaced by the preset distance. Every two adjacent first locking teeth 34 are spaced by a preset distance.

The cross section of the cable tie body 31 is in the arc shape in the width direction (W) of the cable tie body 31, and the first snapping portion 32, the second snapping portion 33 and the first locking teeth 34 are all arranged on the concave side of the cable tie body 31.

The first snapping portion 32 is provided with the first snapping hole 321, the second snapping portion 33 is provided with the second snapping hole 331, the first snapping hole 321 is internally provided with the second locking tooth 322 matched with the first locking teeth 34, and the second snapping hole 331 is internally provided with the third locking tooth 332 matched with the first locking teeth 34. When the cable tie body 31 is in the wrapping state, one of the plurality of first locking teeth 34 is in snap-fit with the second locking tooth 322 in the first snapping hole 321, and the other of the plurality of first locking teeth 34 is in snap-fit with the third locking tooth 332 in the second snapping hole 331.

In the direction (H) perpendicular to the cable tie body 31, the height of the first locking tooth 34 is greater than the distance between the top of the second locking tooth 322 in the first snapping hole 321 and the top wall of the first snapping hole 321. The height of the first locking tooth 34 is greater than the distance between the top of the third locking tooth 332 in the second snapping hole 331 and the top wall of the second snapping hole 331.

An upper half part of the first snapping hole 321 is semicircular, a lower half part is square, and the second locking tooth 322 are arranged in a square space. An upper half part of the second snapping hole 331 is semicircular, a lower half part is square, and the third locking tooth 332 are arranged in a square space.

Side surfaces of the first locking teeth 34, the second locking tooth 322 and the third locking tooth 332 are all in a right triangle shape. The height of the second locking tooth 322 is gradually reduced from the first end to the second end of the cable tie body 31, and the height of the third locking tooth 332 is gradually reduced from the first end to the second end of the cable tie body 31. The second locking tooth 322 may be the same with the third locking tooth 332 in shape and size. The distance d3 between the top of the second locking tooth 322 and the top of the first snapping hole 321 may be equal to the distance d4 between the top of the third locking tooth 332 and the top of the second snapping hole 331.

The width w2 of the second snapping hole 331 is smaller than the width w0 of the cable tie body 31. The width w1 of the first snapping hole 321 is greater than or equal to the width w2 of the second snapping hole 331, and the two sides of the cable tie body 31 are respectively attached to the side wall of the first snapping hole 321.

As shown in FIG. 16 and FIG. 17, in the direction (H) perpendicular to the cable tie body 31, the distance d1 between the top wall of the first snapping hole 321 and the top surface of the first snapping portion 32 is smaller than the distance d2 between the top wall of the second snapping hole 331 and the top surface of the second snapping portion 33.

In the width direction (W) of the cable tie body 31, the cable tie body 31 includes the first portion and the second portion and the third portion located on the two sides of the first portion, and the thickness of the first portion is greater than those of the second portion and the third portion.

As shown in FIG. 18, the cable tie body 31 is provided with the first connecting hole 311 and the second connecting hole 312, the first connecting hole 311 is located between the first snapping portion 32 and the second snapping portion 33, the second connecting hole 312 is located between the first snapping portion 33 and the first locking teeth 34, and the first connecting hole 311 and the second connecting hole 312 are symmetrically formed in the two sides of the second snapping portion 33. Both the first connecting hole 311 and the second connecting hole 312 are circular holes.

The cable tie body 31 is made of insulating materials, so as to realize insulation protection for the components wrapped by the cable tie body 31 and avoid electric shock accidents.

When the flexible cable tie 3 is used:
the first connecting portion 41 of the first connecting element 4 is first aligned with the third connecting portion 51 of the second connecting element 5, and the second connecting portion 42 of the first connecting element 4 is aligned with the fourth connecting portion 52 of the second connecting element 5;
then, the whole flexible cable tie 3 is placed below the first connecting element 4 and the second connecting element 5, such that the second snapping portion 33 is located between the first connecting portion 41 and the second connecting portion 42 and between the third connecting portion 51 and the fourth connecting portion 52;
then, the first fixing element 61 sequentially penetrates through the third fixing hole 53, the first fixing hole 43 and the first connecting hole 311 so as to connect the third connecting portion 51, the first connecting portion 41 and the flexible cable tie 3, and the second fixing element 62 sequentially penetrates through the fourth fixing hole 54, the second fixing hole 44 and the second connecting hole 312 so as to connect the fourth connecting portion 52, the second connecting portion 42 and the flexible cable tie 3; and
finally, the second end of the cable tie body 31 is rolled up to sequentially penetrate through the first snapping hole 321 and the second snapping hole 331, the cable tie body 31 is tightened according to the size of the first connecting element 4 and the second connecting element 5, and the first connecting element 4 and the second connecting element 5 are firmly fixed in the wrap space of the cable tie body 31.

The electrical connection structure includes the first connecting element 4, the second connecting element 5, the first connecting structure, the second connecting structure and the flexible cable tie 3. The first connecting element 4 includes the first connecting portion 41 and the second connecting portion 42. The second connecting element 5 includes the third connecting portion 51 and the fourth connecting portion 52. The first connecting portion 41 and the third connecting portion 51 are electrically connected through the first connecting structure. The second connecting portion 42 and the fourth connecting portion 52 are electrically connected through the second connecting structure. The first connecting structure and the second connecting structure are located on two sides of a second snapping portion 33 respectively. The second end, away from a first end, of the cable tie body 31 penetrates through the first snapping hole 321 and the second snapping hole 331, the first connecting structure is caused to be located among the first snapping portion 32, the second snapping portion 33 and the cable tie body 31, and the second connecting structure is caused to be located between the second snapping portion 33 and the cable tie body 31.

The electrical connection structure further includes the first fixing element 61 and the second fixing element 62, the first fixing element 61 is used to fix the first connecting structure to the cable tie body 31, and the second fixing element 62 is used to fix the second connecting structure to the cable tie body 31.

The cable tie body 31 is provided with the first connecting hole 311 and the second connecting hole 312. The first connecting hole 311 is arranged between the first snapping portion 32 and the second snapping portion 33, and the second connecting hole 312 is arranged on the side, away from the first snapping portion 32, of the second snapping portion 33. The first fixing element 61 penetrates through the first connecting structure and the first connecting hole 311 so as to connect the first connecting portion 41, the third connecting portion 51 and the cable tie body 31, and the second fixing element 62 penetrates through the second connecting structure and the second connecting hole 312 so as to connect the second connecting portion 42, the fourth connecting portion 52 and the cable tie body 31.

In an embodiment of the battery, the battery includes a case 1, a battery body 2 and the electrical connection structure. An accommodating cavity is formed in the case 1, a side wall of the case 1 is provided with a first through hole 11 communicating with the accommodating cavity, the battery body 2 is arranged in the accommodating cavity, the first connecting element 4 is electrically connected to the battery body 2, the second connecting element 5 is arranged outside the case 1, and the third connecting portion 51 and the fourth connecting portion 52 penetrate through the first through hole 11 to be connected to the first connecting element 4, and the electrical connection structure is arranged in the accommodating cavity.

The electrical connection structure and the battery according to the embodiments of the present application abandon the protective cover made of hard plastic materials, and use the flexible cable tie to realize the connection and protection of the first connecting element and the second connecting element, and thus the problems that the high-voltage connector used by the battery at present is likely to break, loosening occurs during assembly and combination, and the manufacturing cost of the protective cover is high can be solved; and in addition, the electrical connection structure and the battery according to the embodiments of the present application are simple in integral structure, can protect a high-voltage connecting portion together, adapt to connecting components different in size, avoid repeated mold opening during manufacturing, and achieve the purposes of cost reduction and efficiency improvement. In addition, the whole flexible cable tie may be made of a single material, which greatly saves cost; the cable tie body is provided with the plurality of first locking teeth, and according to the size of the connecting components, the snap-fit position of the cable tie body after winding can be adjusted, thereby expanding the application range of the flexible cable tie; and the flexible cable tie is convenient to bundle, operate, assemble and disassemble, which can greatly improve operation efficiency.

The present application is not limited to the specific embodiments disclosed herein, but includes all technical solutions falling within the scope of the claims.

## Claims

1. An electrical connection structure, comprising:
a first connecting element (4), comprising a first connecting portion (41) and a second connecting portion (42);
a second connecting element (5), comprising a third connecting portion (51) and a fourth connecting portion (52);
a first connecting structure, through which the first connecting portion (41) and the third connecting portion (51) are electrically connected;
a second connecting structure, through which the second connecting portion (42) and the fourth connecting portion (52) are electrically connected; and
a flexible cable tie (3), comprising:
a cable tie body (31); and
a first snapping portion (32) and a second snapping portion (33), which are arranged at a first end of the cable tie body (31) and spaced by a preset distance, wherein:
the cable tie body (31) has an unfolded state and a wrapping state;
in the unfolded state, the first snapping portion (32) and the second snapping portion (33) are arranged on the same side of the cable tie body (31); and
in the wrapping state, a second end of the cable tie body (31) is connected to the first snapping portion (32) and the second snapping portion (33),
wherein:
the first connecting structure and the second connecting structure are located on two sides of the second snapping portion (33) respectively; and
when the cable tie body (31) is in the wrapping state,
the first connecting structure is caused to be located among the first snapping portion (32), the second snapping portion (33) and the cable tie body (31), and
the second connecting structure is caused to be located between the second snapping portion (33) and the cable tie body (31).

2. The electrical connection structure according to claim 1, wherein:
the cable tie body (31) is provided with a plurality of first locking teeth (34) arranged in its length direction;
the first snapping portion (32) is provided with a first snapping hole (321);
the second snapping portion (33) is provided with a second snapping hole (331); and
the plurality of first locking teeth (34) are in snap-fit with the first snapping portion (32) through the first snapping hole (321) and in snap-fit with the second snapping portion (33) through the second snapping hole (331).

3. The electrical connection structure according to claim 2, wherein the plurality of first locking teeth (34) are arranged on a side surface, provided with the first snapping portion (32) and the second snapping portion (33), of the cable tie body (31).

4. The electrical connection structure according to claim 2 or 3, wherein:
a cross section of the cable tie body (31) is in an arc shape in a width direction of the cable tie body (31); and
the first snapping portion (32), the second snapping portion (33) and the first locking teeth (34) are all arranged on a concave side of the cable tie body (31).

5. The electrical connection structure according to any one of claims 2 to 4, wherein:
the first snapping hole (321) is internally provided with a second locking tooth (322) matched with the first locking teeth (34); and/or
the second snapping hole (331) is internally provided with a third locking tooth (332) matched with the first locking teeth (34).

6. The electrical connection structure according to claim 5, wherein in a direction perpendicular to the cable tie body (31),
the height of the first locking tooth (34) is greater than the distance between the top of the second locking tooth (322) in the first snapping hole (321) and the top wall of the first snapping hole (321); and/or
the height of the first locking tooth (34) is greater than the distance between the top of the third locking tooth (332) in the second snapping hole (331) and the top wall of the second snapping hole (331).

7. The electrical connection structure according to claim 5 or 6, wherein in the width direction of the cable tie body (31),
the width of the first locking tooth (34) is greater than the width of the second locking tooth (322); and/or
the width of the first locking tooth (34) is greater than the width of the third locking tooth (332).

8. The electrical connection structure according to any one of claims 5 to 7, wherein:
the portion, opposite to the second locking tooth (322), of the first snapping hole (321) is in an arc shape; and/or
the portion, opposite to the third locking tooth (332), of the second snapping hole (331) is in an arc shape.

9. The electrical connection structure according to any one of claims 2 to 8, wherein a side surface of the first locking tooth (34) is in a right triangle shape.

10. The electrical connection structure according to any one of claims 2 to 9, wherein:
the first snapping portion (32) is arranged at a position close to the first end of the cable tie body (31); and
the second snapping portion (33) is arranged between the first snapping portion (32) and the first locking teeth (34),
wherein preferably, the width of the second snapping hole (331) is smaller than the width of the cable tie body (31), and/or
wherein preferably:
the width of the first snapping hole (321) is greater than or equal to the width of the second snapping hole (331); and
two sides of the cable tie body (31) are attached to a side wall of the first snapping hole (321) respectively.

11. The electrical connection structure according to claim 10, wherein in the direction perpendicular to the cable tie body (31), the distance between the top wall of the first snapping hole (321) and the top surface of the first snapping portion (32) is smaller than the distance between the top wall of the second snapping hole (331) and the top surface of the second snapping portion (33).

12. The electrical connection structure according to any one of claim 1-11, further comprising a first fixing element (61) and a second fixing element (62), wherein:
the first fixing element (61) is used to fix the first connecting structure to the cable tie body (31); and
the second fixing element (62) is used to fix the second connecting structure to the cable tie body (31).

13. The electrical connection structure according to claim 12, wherein:
the cable tie body (31) is provided with a first connecting hole (311) and a second connecting hole (312);
the first connecting hole (311) is arranged between the first snapping portion (32) and the second snapping portion (33);
the second connecting hole (312) is arranged on the side, away from the first snapping portion (32), of the second snapping portion (33);
the first fixing element (61) penetrates through the first connecting structure and the first connecting hole (311) so as to connect the first connecting portion (41), the third connecting portion (51) and the cable tie body (31); and
the second fixing element (62) penetrates through the second connecting structure and the second connecting hole (312) so as to connect the second connecting portion (42), the fourth connecting portion (52) and the cable tie body (31).

14. A battery, comprising:
a case (1) internally provided with an accommodating cavity, wherein a side wall of the case (1) is provided with a first through hole (11) communicating with the accommodating cavity;
a battery body (2) arranged in the accommodating cavity; and
the electrical connection structure according to any one of claims 1 to 13,
wherein:
the first connecting element (4) is electrically connected to the battery body (2);
the second connecting element (5) is arranged outside the case (1);
the third connecting portion (51) and the fourth connecting portion (52) penetrate through the first through hole (11) to be connected to the first connecting element (4); and
the electrical connection structure is arranged in the accommodating cavity.

## Patentansprüche

1. Elektrische Verbindungskonstruktion, die Folgendes umfasst:
ein erstes Verbindungselement (4), das einen ersten Verbindungsteil (41) und einen zweiten Verbindungsteil (42) umfasst,
ein zweites Verbindungselement (5), das einen dritten Verbindungsteil (51) und einen vierten Verbindungsteil (52) umfasst,
eine erste Verbindungskonstruktion, über die der erste Verbindungsteil (41) und der dritte Verbindungsteil (51) elektrisch verbunden sind,
eine zweite Verbindungskonstruktion, über die der zweite Verbindungsteil (42) und der vierte Verbindungsteil (52) elektrisch verbunden sind, und
einen flexiblen Kabelbinder (3), der Folgendes umfasst:
einen Kabelbinderhauptteil (31) und
einen ersten Schnappteil (32) und einen zweiten Schnappteil (33), die an einem ersten Ende des Kabelbinderhauptteils (31) angeordnet sind und in einem vorgegebenen Abstand zueinander liegen, wobei:
der Kabelbinderhauptteil (31) einen aufgeklappten und einen umgeklappten Zustand aufweist,
in dem aufgeklappten Zustand der erste Schnappteil (32) und der zweite Schnappteil (33) auf der gleichen Seite des Kabelbinderhauptteils (31) angeordnet sind und
in dem umgeklappten Zustand ein zweites Ende des Kabelbinderhauptteils (31) mit dem ersten Schnappteil (32) und dem zweiten Schnappteil (33) verbunden ist,
wobei:
die erste und die zweite Verbindungskonstruktion jeweils auf zwei Seiten des zweiten Schnappteils (33) liegen und,
wenn sich der Kabelbinderhauptteil (31) im umgeklappten Zustand befindet,
die erste Verbindungskonstruktion dadurch zwischen dem ersten Schnappteil (32), dem zweiten Schnappteil (33) und dem Kabelbinderhauptteil (31) liegt und
die zweite Verbindungskonstruktion dadurch zwischen dem zweiten Schnappteil (33) und dem Kabelbinderhauptteil (31) liegt.

2. Elektrische Verbindungskonstruktion nach Anspruch 1, wobei:
der Kabelbinderhauptteil (31) mit mehreren in seiner Längsrichtung angeordneten ersten Rastzähnen (34) versehen ist,
der erste Schnappteil (32) mit einer ersten Schnappöffnung (321) versehen ist,
der zweite Schnappteil (33) mit einer zweiten Schnappöffnung (331) versehen ist und
die mehreren ersten Rastzähne (34) über die erste Schnappöffnung (321) mit dem ersten Schnappteil (32) und über die zweite Schnappöffnung (331) mit dem zweiten Schnappteil (33) eine Schnappverbindung eingehen.

3. Elektrische Verbindungskonstruktion nach Anspruch 2, wobei die mehreren ersten Rastzähne (34) an einer mit dem ersten Schnappteil (32) und dem zweiten Schnappteil (33) versehenen Seitenfläche des Kabelbinderhauptteils (31) angeordnet sind.

4. Elektrische Verbindungskonstruktion nach Anspruch 2 oder 3, wobei:
ein Querschnitt des Kabelbinderhauptteils (31) in einer Breitenrichtung des Kabelbinderhauptteils (31) bogenförmig ist und
der erste Schnappteil (32), der zweite Schnappteil (33) und die ersten Rastzähne (34) alle auf einer konkaven Seite des Kabelbinderhauptteils (31) angeordnet sind.

5. Elektrische Verbindungskonstruktion nach einem der Ansprüche 2 bis 4, wobei:
die erste Schnappöffnung (321) innen mit einem zu den ersten Rastzähnen (34) passenden zweiten Rastzahn (322) versehen ist und/oder
die zweite Schnappöffnung (331) innen mit einem zu den ersten Rastzähnen (34) passenden dritten Rastzahn (332) versehen ist.

6. Elektrische Verbindungskonstruktion nach Anspruch 5, wobei in einer senkrecht zum Kabelbinderhauptteil (31) verlaufenden Richtung
die Höhe des ersten Rastzahns (34) größer ist als der Abstand zwischen der Spitze des zweiten Rastzahns (322) in der ersten Schnappöffnung (321) und der oberen Wand der ersten Schnappöffnung (321) und/oder
die Höhe des ersten Rastzahns (34) größer ist als der Abstand zwischen der Spitze des dritten Rastzahns (332) in der zweiten Schnappöffnung (331) und der oberen Wand der zweiten Schnappöffnung (331).

7. Elektrische Verbindungskonstruktion nach Anspruch 5 oder 6, wobei in der Breitenrichtung des Kabelbinderhauptteils (31)
die Breite des ersten Rastzahns (34) größer ist als die Breite des zweiten Rastzahns (322)
und/oder
die Breite des ersten Rastzahns (34) größer ist als die Breite des dritten Rastzahns (332).

8. Elektrische Verbindungskonstruktion nach einem der Ansprüche 5 bis 7, wobei:
der dem zweiten Rastzahn (322) gegenüberliegende Teil der ersten Schnappöffnung (321) bogenförmig ist und/oder
der dem dritten Rastzahn (332) gegenüberliegende Teil der zweiten Schnappöffnung (331) bogenförmig ist.

9. Elektrische Verbindungskonstruktion nach einem der Ansprüche 2 bis 8, wobei eine Seitenfläche des ersten Rastzahns (34) die Form eines rechtwinkligen Dreiecks aufweist.

10. Elektrische Verbindungskonstruktion nach einem der Ansprüche 2 bis 9, wobei:
der erste Schnappteil (32) in einer Position in der Nähe des ersten Endes des Kabelbinderhauptteils (31) angeordnet ist und
der zweite Schnappteil (33) zwischen dem ersten Schnappteil (32) und den ersten Rastzähnen (34) angeordnet ist,
wobei die Breite der zweiten Schnappöffnung (331) vorzugsweise geringer ist als die Breite des Kabelbinderhauptteils (31) und/oder
wobei vorzugsweise:
die Breite der ersten Schnappöffnung (321) mindestens der Breite der zweiten Schnappöffnung (331) entspricht und
zwei Seiten des Kabelbinderhauptteils (31) jeweils an einer Seitenwand der ersten Schnappöffnung (321) angebracht sind.

11. Elektrische Verbindungskonstruktion nach Anspruch 10, wobei der Abstand zwischen der oberen Wand der ersten Schnappöffnung (321) und der oberen Fläche des ersten Schnappteils (32) in der senkrecht zum Kabelbinderhauptteil (31) verlaufenden Richtung geringer ist als der Abstand zwischen der oberen Wand der zweiten Schnappöffnung (331) und der oberen Fläche des zweiten Schnappteils (33).

12. Elektrische Verbindungskonstruktion nach einem der Ansprüche 1-11, die ferner ein erstes Befestigungselement (61) und ein zweites Befestigungselement (62) umfasst, wobei:
das erste Befestigungselement (61) zum Befestigen der ersten Verbindungskonstruktion an dem Kabelbinderhauptteil (31) benutzt wird und
das zweite Befestigungselement (62) zum Befestigen der zweiten Verbindungskonstruktion an dem Kabelbinderhauptteil (31) benutzt wird.

13. Elektrische Verbindungskonstruktion nach Anspruch 12, wobei:
der Kabelbinderhauptteil (31) mit einer ersten Verbindungsöffnung (311) und einer zweiten Verbindungsöffnung (312) versehen ist,
die erste Verbindungsöffnung (311) zwischen dem ersten Schnappteil (32) und dem zweiten Schnappteil (33) angeordnet ist,
die zweite Verbindungsöffnung (312) auf der von dem ersten Schnappteil (32) weg weisenden Seite des zweiten Schnappteils (33) angeordnet ist,
das erste Befestigungselement (61) durch die erste Verbindungskonstruktion und die erste Verbindungsöffnung (311) hindurchgesteckt ist und so den ersten Verbindungsteil (41), den dritten Verbindungsteil (51) und den Kabelbinderhauptteil (31) verbindet und
das zweite Befestigungselement (62) durch die zweite Verbindungskonstruktion und die zweite Verbindungsöffnung (312) hindurchgesteckt ist und so den zweiten Verbindungsteil (42), den vierten Verbindungsteil (52) und den Kabelbinderhauptteil (31) verbindet.

14. Batterie, die Folgendes umfasst:
ein Gehäuse (1), das innen mit einem Aufnahmehohlraum versehen ist, wobei eine Seitenwand des Gehäuses (1) mit einer mit dem Aufnahmehohlraum verbundenen ersten Durchgangsöffnung (11) versehen ist,
einen in dem Aufnahmehohlraum angeordneten Batteriehauptteil (2) und
die elektrische Verbindungskonstruktion nach einem der Ansprüche 1 bis 13,
wobei:
das erste Verbindungselement (4) elektrisch mit dem Batteriehauptteil (2) verbunden ist,
das zweite Verbindungselement (5) außerhalb des Gehäuses (1) angeordnet ist,
der dritte Verbindungsteil (51) und der vierte Verbindungsteil (52) zum Verbinden mit dem ersten Verbindungselement (4) durch die erste Durchgangsöffnung (11) hindurchgesteckt sind und
die elektrische Verbindungskonstruktion in dem Aufnahmehohlraum angeordnet ist.

## Revendications

1. Structure de connexion électrique, comprenant :
un premier élément de connexion (4), comprenant une première partie de connexion (41) et une deuxième partie de connexion (42) ;
un second élément de connexion (5), comprenant une troisième partie de connexion (51) et une quatrième partie de connexion (52) ;
une première structure de connexion, par le biais de laquelle la première partie de connexion (41) et la troisième partie de connexion (51) sont connectées électriquement ;
une seconde structure de connexion, par le biais de laquelle la deuxième partie de connexion (42) et la quatrième partie de connexion (52) sont connectées électriquement ; et
une attache de câble flexible (3), comprenant :
un corps d'attache de câble (31) ; et
une première partie d'encliquetage (32) et une seconde partie d'encliquetage (33), qui sont disposées à une première extrémité du corps d'attache de câble (31) et espacées par une distance prédéfinie, dans laquelle :
le corps d'attache de câble (31) présente un état déplié et un état d'enroulement ;
dans l'état déplié, la première partie d'encliquetage (32) et la seconde partie d'encliquetage (33) sont disposées du même côté du corps d'attache de câble (31) ; et
dans l'état d'enroulement, une seconde extrémité du corps d'attache de câble (31) est connectée à la première partie d'encliquetage (32) et à la seconde partie d'encliquetage (33),
dans laquelle :
la première structure de connexion et la seconde structure de connexion sont situées respectivement sur deux côtés de la seconde partie d'encliquetage (33) ; et
lorsque le corps d'attache de câble (31) est dans l'état d'enroulement,
la première structure de connexion est amenée à être située parmi la première partie d'encliquetage (32), la seconde partie d'encliquetage (33) et le corps d'attache de câble (31), et
la seconde structure de connexion est amenée à être située entre la seconde partie d'encliquetage (33) et le corps d'attache de câble (31).

2. Structure de connexion électrique selon la revendication 1, dans laquelle :
le corps d'attache de câble (31) est pourvu d'une pluralité de premières dents de verrouillage (34) disposée dans le sens de sa longueur ;
la première partie d'encliquetage (32) est pourvue d'un premier trou d'encliquetage (321) ;
la seconde partie d'encliquetage (33) est pourvue d'un second trou d'encliquetage (331) ; et
la pluralité de premières dents de verrouillage (34) est ajustée par encliquetage avec la première partie d'encliquetage (32) par le biais du premier trou d'encliquetage (321) et ajustée par encliquetage avec la seconde partie d'encliquetage (33) par le biais du second trou d'encliquetage (331).

3. Structure de connexion électrique selon la revendication 2, dans laquelle la pluralité de premières dents de verrouillage (34) est disposée sur une surface latérale, pourvue de la première partie d'encliquetage (32) et de la seconde partie d'encliquetage (33), du corps d'attache de câble (31).

4. Structure de connexion électrique selon la revendication 2 ou 3, dans laquelle :
une section transversale du corps d'attache de câble (31) est en forme d'arc dans le sens de la largeur du corps d'attache de câble (31) ; et
la première partie d'encliquetage (32), la seconde partie d'encliquetage (33) et les premières dents de verrouillage (34) sont toutes disposées sur un côté concave du corps d'attache de câble (31).

5. Structure de connexion électrique selon l'une quelconque des revendications 2 à 4, dans laquelle :
le premier trou d'encliquetage (321) est pourvu intérieurement d'une deuxième dent de verrouillage (322) accouplée avec les premières dents de verrouillage (34) ; et/ou
le second trou d'encliquetage (331) est pourvu à l'intérieur d'une troisième dent de verrouillage (332) accouplée avec les premières dents de verrouillage (34).

6. Structure de connexion électrique selon la revendication 5, dans laquelle dans une direction perpendiculaire au corps d'attache de câble (31),
la hauteur de la première dent de verrouillage (34) est supérieure à la distance entre le haut de la deuxième dent de verrouillage (322) dans le premier trou d'encliquetage (321) et la paroi supérieure du premier trou d'encliquetage (321) ; et/ou
la hauteur de la première dent de verrouillage (34) est supérieure à la distance entre le haut de la troisième dent de verrouillage (332) dans le second trou d'encliquetage (331) et la paroi supérieure du second trou d'encliquetage (331).

7. Structure de connexion électrique selon la revendication 5 ou 6, dans laquelle dans le sens de la largeur du corps d'attache de câble (31),
la largeur de la première dent de verrouillage (34) est supérieure à la largeur de la deuxième dent de verrouillage (322) ; et/ou
la largeur de la première dent de verrouillage (34) est supérieure à la largeur de la troisième dent de verrouillage (332).

8. Structure de connexion électrique selon l'une quelconque des revendications 5 à 7, dans laquelle :
la partie, opposée à la deuxième dent de verrouillage (322), du premier trou d'encliquetage (321) est en forme d'arc ; et/ou
la partie, opposée à la troisième dent de verrouillage (332), du second trou d'encliquetage (331) est en forme d'arc.

9. Structure de connexion électrique selon l'une quelconque des revendications 2 à 8, dans laquelle une surface latérale de la première dent de verrouillage (34) est en forme de triangle rectangle.

10. Structure de connexion électrique selon l'une quelconque des revendications 2 à 9, dans laquelle :
la première partie d'encliquetage (32) est disposée à une position proche de la première extrémité du corps d'attache de câble (31) ; et
la seconde partie d'encliquetage (33) est disposée entre la première partie d'encliquetage (32) et les premières dents de verrouillage (34),
dans laquelle de préférence, la largeur du second trou d'encliquetage (331) est inférieure à la largeur du corps d'attache de câble (31), et/ou
dans laquelle de préférence :
la largeur du premier trou d'encliquetage (321) est supérieure ou égale à la largeur du second trou d'encliquetage (33 1) ; et
deux côtés du corps d'attache de câble (31) sont respectivement fixés à une paroi latérale du premier trou d'encliquetage (321).

11. Structure de connexion électrique selon la revendication 10, dans laquelle, dans la direction perpendiculaire au corps d'attache de câble (31), la distance entre la paroi supérieure du premier trou d'encliquetage (321) et la surface supérieure de la première partie d'encliquetage (32) est inférieure à la distance entre la paroi supérieure du second trou d'encliquetage (331) et la surface supérieure de la seconde partie d'encliquetage (33).

12. Structure de connexion électrique selon l'une quelconque des revendications 1 à 11, comprenant en outre un premier élément de fixation (61) et un second élément de fixation (62), dans laquelle :
le premier élément de fixation (61) sert à fixer la première structure de connexion au corps d'attache de câble (31) ; et
le second élément de fixation (62) sert à fixer la seconde structure de connexion au corps d'attache de câble (31).

13. Structure de connexion électrique selon la revendication 12, dans laquelle :
le corps d'attache de câble (31) est pourvu d'un premier trou de connexion (311) et d'un second trou de connexion (312) ;
le premier trou de connexion (311) est disposé entre la première partie d'encliquetage (32) et la seconde partie d'encliquetage (33) ;
le second trou de connexion (312) est disposé sur le côté, à l'écart de la première partie d'encliquetage (32), de la seconde partie d'encliquetage (33) ;
le premier élément de fixation (61) pénètre à travers la première structure de connexion et le premier trou de connexion (311) de manière à connecter la première partie de connexion (41), la troisième partie de connexion (51) et le corps d'attache de câble (31) ; et
le second élément de fixation (62) pénètre à travers la seconde structure de connexion et le second trou de connexion (312) de manière à connecter la deuxième partie de connexion (42), la quatrième partie de connexion (52) et le corps d'attache de câble (31).

14. Batterie, comprenant :
un boîtier (1) pourvu à l'intérieur d'une cavité d'accueil, dans laquelle une paroi latérale du boîtier (1) est pourvue d'un premier trou traversant (11) communiquant avec la cavité d'accueil ;
un corps de batterie (2) disposé dans la cavité d'accueil ; et
la structure de connexion électrique selon l'une quelconque des revendications 1 à 13, dans laquelle :
le premier élément de connexion (4) est connecté électriquement au corps de batterie (2) ;
le second élément de connexion (5) est disposé à l'extérieur du boîtier (1);
la troisième partie de connexion (51) et la quatrième partie de connexion (52) pénètrent par le premier trou traversant (11) pour être connectées au premier élément de connexion (4) ; et
la structure de connexion électrique est disposée dans la cavité d'accueil.
